# EUROPEAN PATENT APPLICATION

(11) **EP 4 005 845 A1**
(43) Date of publication of application: **01.06.2022**
(21) Application number: 19944263.3
(22) Date of filing: 29.10.2019
(51) Int. Cl.: B60K 17/12, F16H 57/021, F16C 35/06

(54) **FIXING STRUCTURE FOR AUXILIARY BEARING OF ELECTRIC DRIVE ASSEMBLY, AND ELECTRIC DRIVE ASSEMBLY**

(30) Priority: 03.09.2019 CN 201910828186
(71) Applicant: Jing-Jin Electric Technologies Co., Ltd., Beijing 100016 (CN)
(72) Inventor: YU, Ping, Beijing 100016 (CN); LI, Jianwen, Beijing 100016 (CN); YANG, Xudong, Beijing 100016 (CN)
(74) Representative: AOMB Polska Sp. z.o.o.
(86) International application number: PCT/CN2019/114071
(87) International publication number: WO 2021/042467

(57) **Abstract**

A fixing structure for an auxiliary bearing of an electric drive assembly and an electric drive assembly are disclosed. The fixing structure comprises a bearing pressing plate (1), a bolt (6), a lock nut (8), an auxiliary bearing outer ring (2) and an auxiliary bearing inner ring (3). The bearing pressing plate (1) is provided with a through hole, the housing (9) is provided with a threaded hole, and the bolt (6) passes through the through hole and is fixed in the threaded hole. The bearing pressing plate (1) pre-tightens one side of the auxiliary bearing outer ring (2), and the housing (9) limits a position of the other side of the auxiliary bearing outer ring (2). The lock nut (8) is sleeved on the shaft (4) to pre-tighten one side of the auxiliary bearing inner ring (3), and the gear (5) limits a position of the other side of the auxiliary bearing inner ring (3). The bearing fixing solution has a simple structure; moreover, the inner and outer rings of the bearing are pre-tightened by threads, thereby avoiding over-positioning of the bearing, reducing the running noise of the bearing, and improving the service life of bearing.

## Description

### TECHNICAL FIELD

The present disclosure relates to the field of electric drive assembly manufacturing, in particular to a fixing structure for an auxiliary bearing of an electric drive assembly and an electric drive assembly.

### BACKGROUND

In the current pure electric or hybrid new energy vehicles, the bearings on the gearbox shaft and motor shaft in the electric drive assembly are often over constrained. The motor has a wide rotation speed range and the rotation speed is high. When the bearing runs in the high rotation speed range, the outer ring is prone to sliding and displacement, resulting in serious wear of the bearing hole and large vibration during operation, which will not only reduce the service life of the bearing, but also produce abnormal noise and affect the ride comfort of the vehicle.

### SUMMARY

In view of the above problems, the present disclosure is proposed to provide a fixing structure for an auxiliary bearing of an electric drive assembly and an electric drive assembly that solve or at least partially solve the above technical problems.

In order to achieve the above object, the present disclosure adopts the following technical solutions.

An aspect of the present disclosure provides a fixing structure for an auxiliary bearing of an electric drive assembly, wherein
the electric drive assembly comprises a gearbox and a motor, an input shaft of the gearbox and a motor shaft of the motor are a same shaft, a gear is installed on the input shaft of the gearbox, and the auxiliary bearing is disposed in a bearing hole of a housing between the gearbox and the motor;
the fixing structure comprises a bearing pressing plate, a bolt, a lock nut, an auxiliary bearing outer ring and an auxiliary bearing inner ring, the bearing pressing plate is provided with a through hole, the housing is provided with a threaded hole, the bolt passes through the through hole and is fixed in the threaded hole, the bearing pressing plate pre-tightens one side of the auxiliary bearing outer ring, the housing limits a position of other side of the auxiliary bearing outer ring, the lock nut is sleeved on the shaft to pre-tighten one side of the auxiliary bearing inner ring, and the gear limits a position of other side of the auxiliary bearing inner ring.

Optionally, the bearing pressing plate and the lock nut are located on a same side or on different sides of the auxiliary bearing.

Optionally, a head of the bolt and the bearing pressing plate are located on a same side or on different sides of the auxiliary bearing.

Optionally, the bolt is a hexagon flange bolt.

Optionally, a sealing gasket is further provided under a flange surface of the hexagon flange bolt.

Optionally, an edge of the bearing pressing plate is provided with a chamfer.

Optionally, an outer side of the lock nut is further provided with an anti-loosening ring. Another aspect of the present disclosure provides an electric drive assembly comprising the fixing structure for the auxiliary bearing according to any one stated above.

The technical solutions of the present disclosure have the following advantages.

In the fixing structure for auxiliary bearing of the present disclosure, one side of the bearing inner ring is pressed on the gear end face, at the other side by pre-tightening of the lock nut and the thread on the shaft, the bearing inner ring is fixed axially, the bearing pressing plate is tightened on the housing through the hexagon flange bolt, and the bearing outer ring is pressed in the bearing hole so as to limit the position axially and circumferentially, thereby preventing the bearing from over-positioning and displacement; moreover, the positions of the auxiliary bearing and the bearing hole on the housing are limited by the pressure of the pressing plate, thereby avoiding the running ring when the bearing rotates at high speed.

The bearing fixing solution has a simple structure; moreover, the inner and outer rings of the bearing are pre-tightened by threads, thereby avoiding over-positioning of the bearing, reducing the running noise of the bearing, and improving the service life of bearing.

The above is only an overview of the technical solutions of the present disclosure. In order to better understand the technical means of the present disclosure so that it can be implemented according to the contents of the description, and in order to make the above and other objects, features and advantages of the present disclosure more obvious and easy to understand, the specific embodiments of the present disclosure are given below.

### BRIEF DESCRIPTION OF DRAWINGS

By reading the detailed description of the preferred embodiments below, various other advantages and benefits will become clear to a person of ordinary skill in the art. The drawings are only used for the purpose of illustrating the preferred embodiments, and should not be considered as a limitation to the present disclosure. Moreover, throughout the drawings, like reference numerals denote like components. In the drawings:

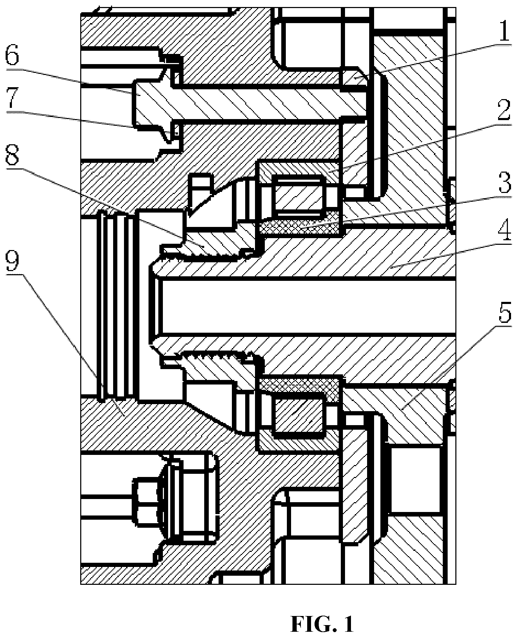

FIG. 1 is a schematic diagram of a fixing structure for an auxiliary bearing of an electric drive assembly in an embodiment of the present disclosure.

In the drawings: 1. bearing pressing plate; 2. auxiliary bearing outer ring; 3. auxiliary bearing inner ring; 4. shaft; 5. gear; 6. bolt; 7. sealing ring; 8. lock nut; 9. housing.

### DETAILED DESCRIPTION

Illustrative embodiments of the present disclosure will be described in more detail with reference to the drawings. Although the drawings show the illustrative embodiments of the present disclosure, it should be understood that the present disclosure can be implemented in various ways and should not be limited by the embodiments disclosed herein. On the contrary, the embodiments are provided for a more thorough and complete understanding of the present disclosure, so as to fully convey the scope of the present disclosure to those skilled in the art. FIG. 1 is a schematic diagram of a fixing structure for an auxiliary bearing of an electric drive assembly in an embodiment of the present disclosure. The electric drive assembly in the present embodiment comprises a gearbox and a motor. The input shaft of the gearbox and the motor shaft of the motor are the same shaft, and the input shaft and the motor shaft are integrated through fixed connection, thereby simplifying the structure of the electric drive assembly, improving the transmission efficiency, and reducing the design and manufacturing costs. A gear 5 is installed on the input shaft of the gearbox. The auxiliary bearing is disposed in a bearing hole of a housing 9 between the gearbox and the motor.

Referring to FIG. 1, the fixing structure for the auxiliary bearing in the present embodiment comprises a bearing pressing plate 1, a bolt 6, a lock nut 8, an auxiliary bearing outer ring 2 and an auxiliary bearing inner ring 3. The bearing pressing plate 1 is provided with a through hole, the housing 9 is provided with a threaded hole, and the bolt 6 passes through the through hole and is fixed in the threaded hole. The bearing pressing plate 1 pre-tightens one side of the auxiliary bearing outer ring 2, and the housing limits the position of the other side of the auxiliary bearing outer ring 2. The lock nut 8 is sleeved on the shaft to pre-tighten one side of the auxiliary bearing inner ring 3, and the gear 5 limits the position of the other side of the auxiliary bearing inner ring 3. In the present embodiment, the specific position relationship between the bearing pressing plate 1 and the lock nut 8 is not limited. According to the specific structure of the housing, the bearing pressing plate and the lock nut may be located on the same side or on different sides.

The fixing structure for the auxiliary bearing disclosed in the present embodiment of the present disclosure can press the bearing outer ring into the bearing hole, limit the position axially and circumferentially, and prevent the bearing from over-positioning and displacement; moreover, the positions of the auxiliary bearing and the bearing hole on the housing are limited by the pressure of the pressing plate, thereby avoiding the running ring when the bearing rotates at high speed. The bearing fixing solution has a simple structure; moreover, the inner and outer rings of the bearing are pre-tightened by threads, thereby avoiding over-positioning of the bearing, reducing the running noise of the bearing, and improving the service life of bearing.

In an embodiment, according to the shape characteristics of the housing, in order to facilitate the installation of the bearing pressing plate, the bearing pressing plate 1 and the lock nut 8 may be located on the same side or on different sides of the auxiliary bearing.

In an embodiment, the installation position of the bolt 6 may also be selected based on the shape characteristics of the housing and the actual installation conditions, and the head of the bolt 6 and the bearing pressing plate may be located on the same side or on different sides of the auxiliary bearing.

In an embodiment, in order to seal the inner cavity of the gearbox and assembly, the bolt may be provided as a hexagonal flange bolt, and a sealing gasket may be further installed under the flange surface of the hexagonal flange bolt. Of course, the bolt type of similar structure or other gasket structure may also be selected.

In a preferred embodiment, according to the needs of assembly and design, the edge of the bearing pressing plate is provided with a chamfer, and the chamfer may be a plane or an arc surface. Further, in order to prevent the lock nut from loosening, the outer side of the lock nut is further provided with an anti-loosening ring.

Another aspect of the present disclosure provides an electric drive assembly, which comprises the fixing structure for the auxiliary bearing according to any one stated above.

To sum up, the fixing structure disclosed in the present disclosure comprises a bearing pressing plate, a bolt, a lock nut, an auxiliary bearing outer ring and an auxiliary bearing inner ring. The bearing pressing plate is provided with a through hole, the housing is provided with a threaded hole, and the bolt passes through the through hole and is fixed in the threaded hole. The bearing pressing plate pre-tightens one side of the auxiliary bearing outer ring, and the housing limits a position of the other side of the auxiliary bearing outer ring. The lock nut is sleeved on the shaft to pre-tighten one side of the auxiliary bearing inner ring, and the gear limits a position of the other side of the auxiliary bearing inner ring. The bearing fixing solution has a simple structure; moreover, the inner and outer rings of the bearing are pre-tightened by threads, thereby avoiding over-positioning of the bearing, reducing the running noise of the bearing, and improving the service life of bearing.

The above are only the specific embodiments of the present disclosure, but the protection scope of the present disclosure is not limited to this. Any person skilled in the art can easily think of changes or substitutions within the technical scope disclosed by the present disclosure, which should be covered by the protection scope of the present disclosure. Therefore, the protection scope of the present disclosure shall be subject to the protection scope of the claims.

## Claims

1. A fixing structure for an auxiliary bearing of an electric drive assembly, **characterized in that**:
the electric drive assembly comprises a gearbox and a motor, an input shaft (4) of the gearbox and a motor shaft (4) of the motor are a same shaft (4), a gear (5) is installed on the input shaft (4) of the gearbox, and the auxiliary bearing is disposed in a bearing hole of a housing (9) between the gearbox and the motor;
the fixing structure comprises a bearing pressing plate (1), a bolt (6), a lock nut (8), an auxiliary bearing outer ring (2) and an auxiliary bearing inner ring (3), the bearing pressing plate (1) is provided with a through hole, the housing (9) is provided with a threaded hole,
the bolt (6) passes through the through hole and is fixed in the threaded hole, the bearing pressing plate (1) pre-tightens one side of the auxiliary bearing outer ring (2), the housing (9) limits a position of other side of the auxiliary bearing outer ring (2), the lock nut (8) is sleeved on the shaft (4) to pre-tighten one side of the auxiliary bearing inner ring (3), and
the gear (5) limits a position of other side of the auxiliary bearing inner ring (3).

2. The fixing structure for the auxiliary bearing according to claim 1, **characterized in that**:
the bearing pressing plate (1) and the lock nut (8) are located on a same side or on different sides of the auxiliary bearing.

3. The fixing structure for the auxiliary bearing according to claim 1, **characterized in that**: a head of the bolt (6) and the bearing pressing plate (1) are located on a same side or on different sides of the auxiliary bearing.

4. The fixing structure for the auxiliary bearing according to any one of claims 1-3, **characterized in that**: the bolt (6) is a hexagon flange bolt (6).

5. The fixing structure for the auxiliary bearing according to claim 4, **characterized in that**: a sealing gasket is further provided under a flange surface of the hexagon flange bolt (6).

6. The fixing structure for the auxiliary bearing according to claim 1, **characterized in that**: an edge of the bearing pressing plate (1) is provided with a chamfer.

7. The fixing structure for the auxiliary bearing according to claim 1, **characterized in that**: an outer side of the lock nut (8) is further provided with an anti-loosening ring.

8. An electric drive assembly, comprising a fixing structure for an auxiliary bearing according to any one of claims 1-5.
